# EUROPÄISCHE PATENTSCHRIFT

(11) **EP 1 629 937 B1**
(45) Veröffentlichungstag und Bekanntmachung des Hinweises auf die Patenterteilung: **21.01.2009**
(21) Anmeldenummer: 04020289.7
(22) Anmeldetag: 26.08.2004
(51) Int. Cl.: B23P 11/02, B23B 31/117, B23B 31/20, B23B 31/40, F16D 1/08, F16B 7/14, B23Q 17/00, B25B 5/06, G01L 5/00

(54) **Spanndorn mit innenliegenden Spannmitteln**
Chuck with inner clamping means
Mandrin de serrage avec moyens de serrage intérieures

(43) Veröffentlichungstag der Anmeldung: 01.03.2006
(73) Patentinhaber: Schunk GmbH & Co. KG Spann- und Greiftechnik, 74348 Lauffen (DE)
(72) Erfinder: Müller, Willi, 97953 Königheim-Pülfingen (DE)
(74) Vertreter: Paul, Dieter-Alfred

(56) Entgegenhaltungen:
- EP-A2- 1 396 301
- WO-A1-20/04067222
- DE-A1- 2 738 527
- DE-A1- 10 018 399
- DE-A1- 10 338 850
- DE-A1- 19 906 803
- DE-C- 846 948
- GB-A- 1 141 529
- GB-A- 1 397 085
- US-A- 2 801 858
- US-A- 4 211 014
- US-A- 5 314 135
- US-B1- 6 629 584
- "EMPFINDLICHE WERKSTUCKE SICHER GESPANNT CLAMPING SENSITIVE COMPONENTS SAFELY" F & M. FEINWERKTECHNIK MIKROTECHNIK MESSTECHNIK, CARL HANSER GMBH, MUNCHEN, DE, Bd. 103, Nr. 5, 1. Mai 1995 (1995-05-01), Seiten S33-S36, XP000533509 ISSN: 0944-1018
- PATENT ABSTRACTS OF JAPAN Bd. 1998, Nr. 01, 30. Januar 1998 (1998-01-30) -& JP 09 225714 A (PLUS ENG:KK), 2. September 1997 (1997-09-02)
- DATABASE WPI Section EI, Week 197514 Derwent Publications Ltd., London, GB; Class S02, AN 1975-D7613W XP002331252 -& SU 436 250 A (KIEV POLY) 29. Oktober 1974 (1974-10-29)

## Beschreibung

Die vorliegende Erfindung betrifft einen Spanndorn nach dem Oberbegriff von Anspruch 1.

Verfahren zur Herstellung einer reibschlüssigen Verbindung zwischen einem Spanndorn dieser Art und einem zu spannenden Bauteil sind beispielsweise aus der DE 195 21 755 C1 sowie der DE 196 24 048 A1 bekannt. Bei diesen Verfahren wird in übereinstimmender Weise ein polygoner oder ovaler Spanndorn durch Aufbringung von radialen Druckkräften elastisch in eine runde Form gebracht, so daß ein runder unter Beibehaltung der radialen Druckkräfte montiert werden kann. Wenn dann die Radialkräfte verringert oder aufgehoben werden, federt der verformte Spanndorn, in seine ovale oder polygone Ausgangsform zurück, so daß der darin über einen Preßsitz fixiert wird.

Diese Art der Verbindung eines Spanndorns mit einem Bauteil hat sich in der Praxis durchaus bewährt. Es wird jedoch zum Teil als nachteilig angesehen, daß der apparative Aufwand zur Aufbringung der radialen Druckkräfte verhältnismäßig hoch ist und viel Platz erfordert.

Ein gattungsgemäßer Spanndorn ist beispielsweise aus der DE 118 309 A1 bekannt. Bei diesem Spanndorn werden auf axial endseitig vorgesehene Krafteinleitungsabschnitte von außen Zugkräfte ausgeübt, um den Spanndorn zu Längen und gleichzeitig eine Reduzierung von dessen Durchmesser herbeizuführen, so dass ein zu spannendes Bauteil auf den Spanndorn geschoben werden kann. Anschließend werden die axialen Zugkräfte wieder rückgängig gemacht, so dass der Spanndorn in seine Ausgangsform zurückkehrt, wodurch eine Druckverbindung zwischen dem Spanndorn und dem aufgeschobenen Bauteil hergestellt wird.

Bei einem Spanndorn, der aus der GB 1 141 529 A bekannt ist, wird ein Bauteil, welches auf ein Spanndorn aufgeschoben ist, gespannt, indem axiale Druckkräfte auf den Spanndorn ausgeübt werden. Diese Kräfte führen dazu, dass der Spanndorn gestaucht wird und sich nach außen wölbt. Während des gesamten Spannvorgangs müssen daher die axialen Druckkräfte aufrecht erhalten werden. Die Druckkräfte werden durch Spannmittel erzeugt, die von außen auf den Spanndorn einwirken, so dass sich ein insgesamt sehr großer Aufbau für die Spannvorrichtung ergibt.

Aufgabe der vorliegenden Erfindung ist es daher, einen Spanndorn der eingangs genannten Art so auszugestalten, dass die Anordnung kompakt ist und die für die radiale verformung erforderlichen Zugkräfte in die Krafteinleitungsabschnitte leicht eingeleitet werden können.

Diese Aufgabe ist erfindungsgemäß dadurch gelöst, dass in einer Durchgangsbohrung des Spanndorns Spannmittel vorgesehen sind, um die axialen Zugkräfte zu erzeugen und die Krafteinleitungsabschnitte zur Einleitung von zugkräften radial innerhalb von der Spannfläche liegen. Durch diese integrale Ausgestaltung wird eine sehr kompakte Anordnung erzielt, was einen besonders flexiblen Einsatz des Spanndorns ermöglicht. Gleichzeitig kann die Spannvorrichtung über die leicht zu erreichenden Krafteinleitungsabschnitte einfach und sicher betätigt werden, was die Handhabung des Spanndorns erleichtert. Zusammen genommen ergibt sich damit ein sehr kompakter und leicht zu bedienender Spanndorn.

Eine konstruktive Ausgestaltung dieser Ausführungsform kann beispielsweise darin bestehen, daß ein Ende des Spanndorns verschlossen ist und die Spannmittel vorgesehen sind, um eine Druckkraft auf das geschlossene Ende auszuüben und so in den Spanndorn axiale Zugkräfte einzuleiten.

Gemäß einer konkreten Ausführungsform ist hierbei vorgesehen, daß in die Durchgangsbohrung an ihren dem verschlossenen Ende gegenüberliegenden axialen Ende eine Gewindemutter verstellbar eingeschraubt ist, wobei zwischen dem verschlossenen Ende und der Gewindemutter Druckübertragungsmittel vorgesehen sind, um bei einem Einschrauben der Gewindemutter in Richtung des geschlossenen Endes eine Druckkraft auf das geschlossene Ende auszuüben und damit eine Zugkraft in das erste Bauteil einzuleiten. Bei dieser Ausführungsform reicht schon eine Drehung der Gewindemutter aus, um den Spannbereich des Spanndorns zum Fügen oder Lösen eines Bauteils zu verformen.

Alternativ ist es möglich, an dem dem geschlossenen Ende gegenüberliegenden Ende des Spanndorns einen hyraulisch oder pneumatisch betätigbaren Kolben vorzusehen, wobei auch hier zwischen dem verschlossenen Ende und dem Kolben Druckübertragungsmittel vorgesehen sind, um bei einer Betätigung des Kolbens auf das geschlossene Ende eine Druckkraft auszuüben und damit in den Spanndorn eine Zugkraft einzuleiten. Der Kolben kann hierbei direkt in dem offenen Ende des Spanndorns verschiebbar angeordnet sein.

Die Druckübertragungsmittel können in einfacher Weise durch eine Druckübertragungsstange gebildet sein. Um Verspannungen oder Reibungskräfte zu reduzieren, weisen die Druckübertragungsmittel zweckmäßigerweise zumindest in den Kontaktbereichen mit der Gewindemutter bzw. dem Kolben einerseits und dem geschlossenen Ende des Spanndorns andererseits Kugeln auf.

Gemäß einer weiteren Ausführungsform ist der Spanndorn gemäß der vorliegenden Erfindung derart ausgebildet, daß in der Durchgangsbohrung des Spanndorns eine Spindel angeordnet ist, die an ihrem einen Endbereich drehbar und axial verschiebbar in dem Spanndorn gelagert ist und an ihrem anderen Endbereich eine Spindelmutter durchgreift, die drehbar aber axialfest in dem Spanndorn gelagert und drehend antreibbar ist, wobei an der Spindel und dem Spanndorn Anschläge vorgesehen sind, die miteinander in Kontakt kommen, wenn die Spindel in einer axialen Richtung bewegt wird. Bei dieser Ausführungsform wird eine Drehung der Spindelmutter in eine Axialbewegung der Spindel umgesetzt, die mit dem Anschlag des Spanndorns in Kontakt kommt und so auf diesen eine Druckkraft ausübt. Auch bei dieser Ausführungsform kann die Durchgangsbohrung des Spanndorns verschlossen sein, um einen Anschlag zu bilden, mit dem die Antriebsspindel in Kontakt kommt.

Schließlich kann in alternativer Weise vorgesehen sein, daß in der Durchgangsbohrung des Spanndorns eine drehend antreibbare Gewindewelle axialfest angeordnet ist, wobei der Spanndorn auf einer ersten Seite des Spannbereiches fixiert ist und auf der gegenüberliegenden Seite des Spannbereiches eine Spindelmutter in dem Spanndorn gehalten ist, welche mit einem Gewindeabschnitt der Spindelwelle in Eingriff steht, so daß eine Drehung der Spindelwelle in eine Axialbewegung der Spindelmutter und des damit verbundenen Abschnitts des Spanndorns umgesetzt wird, wodurch Zugkräfte in den Spanndorn eingeleitet werden, wenn dieses an der gegenüberliegenden ersten Seite der Spannfläche gehalten wird.

Hinsichtlich weiterer vorteilhafter Ausgestaltungen der Erfindung wird auf die Unteransprüche sowie die nachfolgende Beschreibung von Ausführungsbeispielen unter Bezugnahme auf die beiliegende Zeichnung verwiesen. In der Zeichnung zeigt
- Figur 1: eine erste Ausführungsform eines Spanndorns gemäß der vorliegenden Erfindung in perspektivischer Darstellung,
- Figur 2: den Spanndorn aus Figur 1 im Längsschnitt,
- Figur 3: den Spanndorn aus Figur 1 im vergrößerten Querschnitt,
- Figur 4: eine schematische Darstellung eines Verbindungsbereichs zwischen dem Spannbereich und Krafteinleitungsabschnitten des Spanndorns aus Figur 1,
- Figur 5: eine zweite Ausführungsform eines erfindungsgemäßen Spanndorns mit einem Kolben im Längsschnitt,
- Figur 6: eine dritte Ausführungsform eines Spanndorns gemäß der vorliegenden Erfindung im Längsschnitt,
- Figur 7: eine vierte Ausführungsform eines Spanndorns gemäß der vorliegenden Erfindung im Längsschnitt,

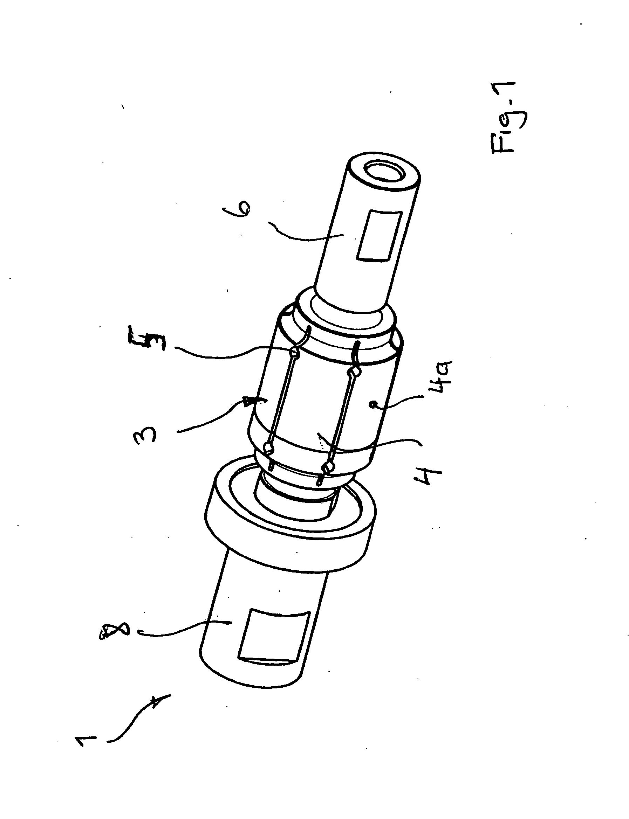

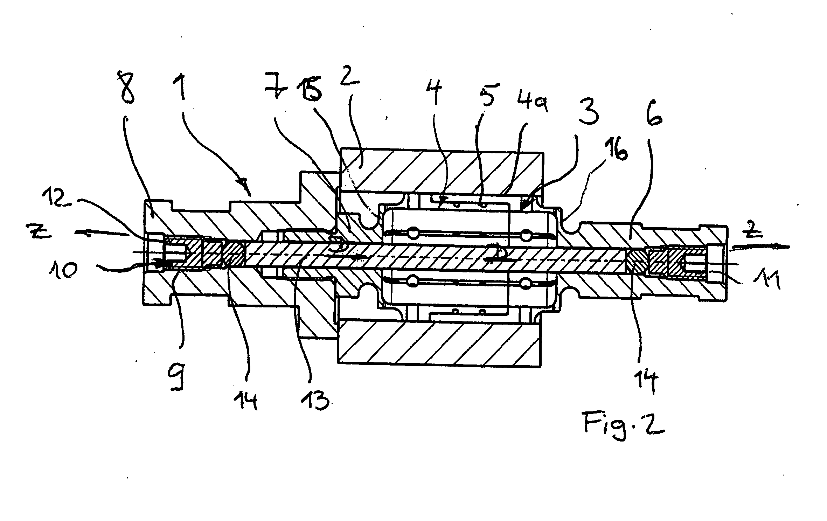

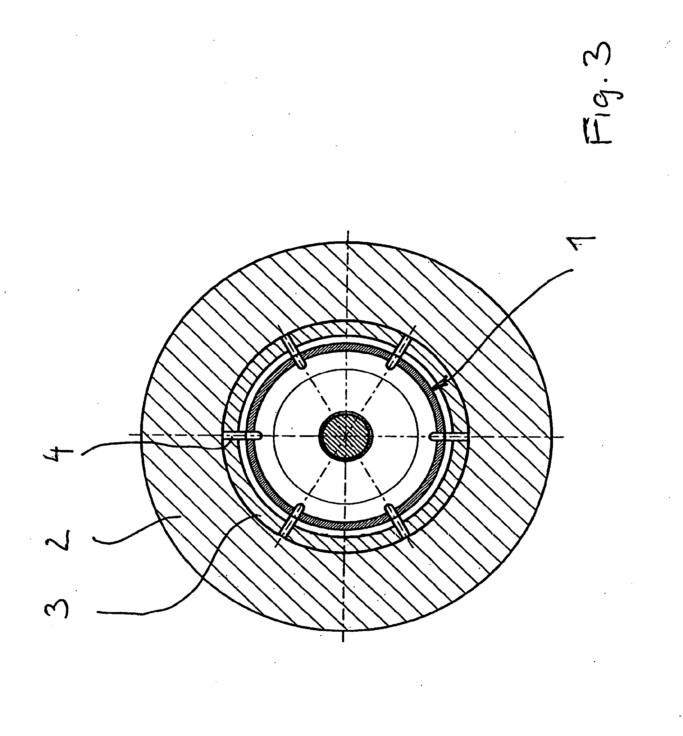

In den Figuren 1 bis 3 ist ein erster Spanndorn gemäß der vorliegenden Erfindung mit einem zu spannenden ringförmigen zweiten Bauteil 2, welches mit dem Spanndorn 1 in der in Figur 2 gezeigten Weise lösbar verbunden werden kann, gezeigt. Hierzu ist ein Grundkörper 3 des Spanndorns 1 mit einer zentralen, dünnwandigen Hülse 4, die eine äußere Spannfläche 4a bildet, versehen, die elastisch verformbar ist und insgesamt sechs axiale Schlitze 5 aufweist, die in Umfangsrichtung der Spannhülse 4 gleichmäßig beabstandet sind. Die Schlitze 5 dienen dazu, die Spannhülse 4 in ihrer Umfangsrichtung elastisch zu gestalten. An die zentrale Spannhülse 4 schließen sich beidseitig axiale Endabschnitte 6, 7 an, die im Vergleich zu der Spannhülse 4 dickwandig ausgebildet sind.

Wie in der Figur 2 gut erkennbar ist, ist auf den linken Endabschnitt 7 des Grundkörpers 3 ein Anschlagelement 8 zur axialen Positionierung des Ringelements 2 auf der Spannhülse 4 aufgeschraubt.

Bei dem vorliegenden Spanndorn 1 ist das ringförmige Bauteil 2 an der Spannhülse 4 des Spanndorns 1 durch einen Preßsitz befestigt. Dieser wird hergestellt, indem die Spannhülse 4, welche im ungespannten Zustand einen Außendurchmesser besitzt, der etwas größer als der Innendurchmesser des zu spannenden ringförmigen Bauteils 2 ist, elastisch nach innen verformt wird, so daß das ringförmige Bauteil 2 auf die Spannhülse 4 aufgeschoben werden kann, und anschließend eine Druckverbindung zwischen dem Bauteil und dem Spanndorn hergestellt wird, indem die Spannhülse 4 elastisch rückverformt wird.

Gemäß der vorliegenden Erfindung ist vorgesehen, daß diese Verformung der Spannhülse 4 durch axiale Zugkräfte bewirkt wird, welche über die Endabschnitte 6, 7 in den Grundkörper 3 des Spanndorns 1 eingeleitet werden. Zur Erzeugung dieser Zugkräfte 7 ist in einer axialen, zentralen Durchgangsbohrung 9 des Spanndorns 1 eine Spanneinrichtung 10 vorgesehen. Zu dieser Spanneinrichtung 10 gehören zwei Gewindemuttern 11, 12, welche in die axialen Endbereiche der Durchgangsbohrung 9 eingeschraubt sind und diese verschließen, und Druckübertragungsmittel 13, 14, die zwischen den Gewindemuttern 11, 12 in der Durchgangsbohrung 9 angeordnet sind, um eine Übertragung von Druckkräften zwischen den Gewindemuttern 10, 11 zu erlauben. In dem dargestellten Ausführungsbeispielumfassen die Druckübertragungsmittel 13, 14 eine zentrale Druckübertragungsstange 13, welche die Spannhülse 4 durchgreift, wobei zwischen den axialen Enden der Druckübertragungsstange 13 und den Gewindemuttern 11, 12 jeweils eine Stahlkugel 14 vorgesehen ist, um auftretende Reibungskräfte zu gering wie möglich zu halten.

Wenn eine der Gewindemuttern 11, 12 in Richtung der anderen Gewindemutter 12, 11 in den Spanndorn 1 hineingeschraubt wird, führt dies dazu, daß sich in der Spanneinrichtung 10 Druckspannungen D und als Reaktion in dem Grundkörper 3 und dem damit festverbundenen Anschlagelement 8 Zugspannungen Z auftreten.

Um diese Zugspannungen Z in die gewünschte, nach innen gerichtete Verformung der Spannhülse 4 umzusetzen, ist zum einen vorgesehen, daß die Einleitung der Zugkräfte von der Spanneinrichtung 10 in den Spanndorn 1 radial innerhalb der Spannhülse 4 erfolgt. Des weiteren sind die dickwandigen Endbereiche 6, 7 des Grundkörpers 3 mit der Spannhülse 4 über dünnwandige Festkörpergelenke 15, 16 der Spannhülse 4 verbunden, die an ihren radial äußeren Enden einem Drehmoment ausgesetzt sind, das den radial innen wirkenden Zugkräften entspricht und durch welches die oberen Enden der Gelenke 15, 16 und damit auch die Spannhülse 4 nach innen bewegt werden, wie durch die Pfeile M in der Figur 2 angedeutet ist. Daher bieten die Schlitze 5 den erforderlichen Platz für die auftretende Kontraktion der Spannhülse 4.

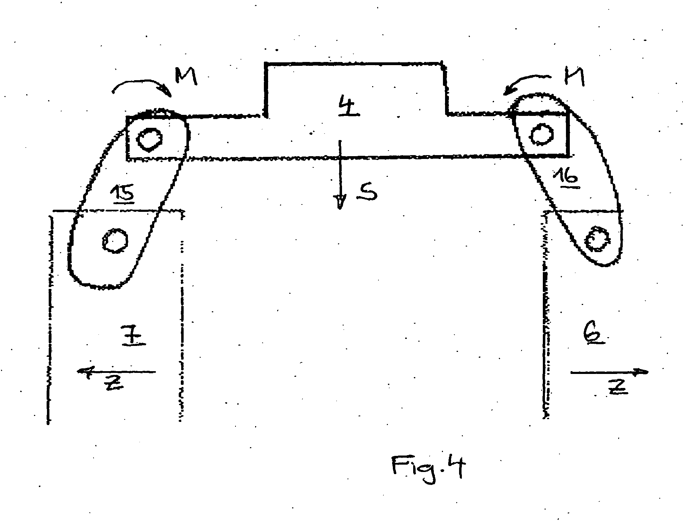

Das Ergebnis, welches hier durch die Festkörpergelenke 15, 16 erzielt wird, ist ähnlich dem von Kippgelenken 15, 16, wie sie in der Figur 4 schematisch gezeigt sind. Wenn bei dieser Ausführungsform entgegengesetzte Zugkräfte Z auf die Endabschnitte 6, 7 des Grundkörpers 3 ausgeübt und die axialen Endabschnitte auseinandergezogen werden, führt dies zu einer Schwenkbewegung der Gelenkhebel 15, 16, welche durch die Pfeile M angedeutet sind, mit der Folge, daß die Spannhülse 4 nach innen bewegt wird, wie durch den Pfeil S angedeutet ist.

Grundsätzlich ist es auch in umgekehrter Weise möglich, axiale Druckkräfte auf die Endabschnitte 6, 7 des Grundkörpers 3 auszuüben, so daß die axialen Endabschnitte 6, 7 zusammengedrückt werden, was zu einer Schwenkbewegung der Gelenkhebel 15, 16 in umgekehrter Richtung der Pfeile M führt mit der Folge, daß die Spannhülse 4 nach außen bewegt wird.

Mit anderen Worten wird bei dem in den Figuren 1 bis 3 dargestellten Spanndorn 1 die Spannhülse 4 zum Fügen oder Lösen des zweiten Bauteils 2 nach innen bewegt, indem eine der Gewindemuttern 10, 11 in den Spanndorn 1 hineingedreht und auf diese Weise in dem Spanndorn 1 Zugkräfte erzeugt werden. Dabei ist die Dehnrate, welche über die Festkörpergelenke 15, 16 erzielbar ist, relativ hoch, so daß große Fügespiele verwirklicht werden können. Von Vorteil ist weiterhin, daß Verformungen im wesentlichen nur im Bereich der Festkörpergelenke 15, 16 auftreten, während die Spannhülse 4 und insbesondere deren Spannfläche 4a weitestgehend eben bleibt, wodurch eine optimale Ausrichtung erreicht wird. Schließlich wird das gespannte Bauteil 2 bei der Rückverformung der Spannhülse 4 gegen das Anschlagelement 8 gezogen, so daß eine optimale axiale Ausrichtung gewährleistet werden kann.

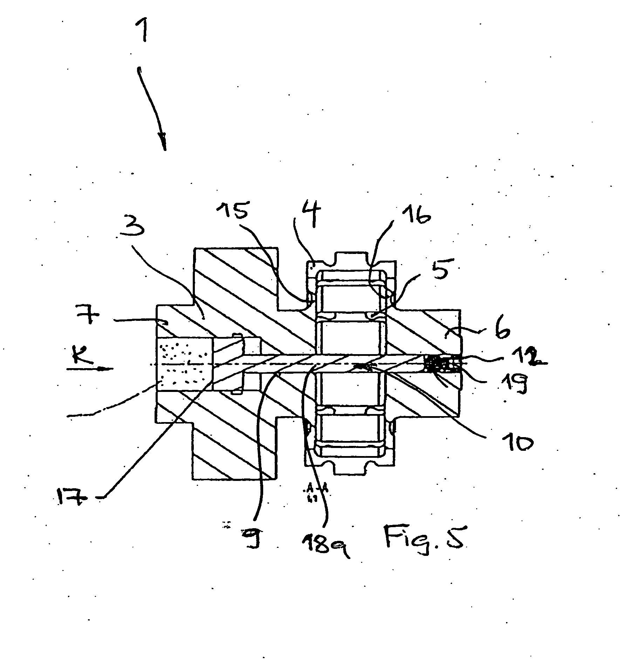

In der Figur 5 ist eine zweite Ausführungsform eines erfindungsgemäßen Spanndorns 1 dargestellt. Dieser entspricht in seinem Grundaufbau dem zuvor erläuterten und in den Figuren 1 bis 3 dargestellten Spanndorn 1 und besitzt einen Grundkörper 3, der von einer zentralen Spannhülse 4 und sich daran seitlich anschließenden, dickwandigen Endabschnitte 6, 7, gebildet wird, wobei die axialen Endabschnitte 6, 7 mit der Spannhülse 4 über Festkörpergelenke 15, 16 verbunden sind. Die Spanneinrichtung 10 ist auch hier in einer Durchgangsbohrung 9 des Spanndorns 1 untergebracht und umfaßt einen Kolben 17, der in den linken axialen Endbereich des Grundkörpers 3 verstellbar angeordnet und durch ein Hydraulikmittel oder pneumatisch beaufschlagbar ist. Das andere axiale Ende der Durchgangsbohrung 9 ist durch eine Gewindemutter 12 verschlossen. Bei dieser Ausführungsform wird der Kolben 17 mit Hydraulikmittel beaufschlagt, um ihn in Richtung des Pfeils K in den Grundkörper 3 hinein zu drücken, wobei die Druckkraft über Druckübertragungsmittel 18 in Form einer Kolbenstange 18a und einer Kugel 18b auf die Gewindemutter 12 übertragen wird. Diese Druckkraft erzeugt wiederum in dem Grundkörper 3 selbst als Reaktion Zugkräfte, welche über die Festkörpergelenke 15, 16 in eine nach innen gerichtete Bewegung der Spannhülse 4 umgesetzt werden.

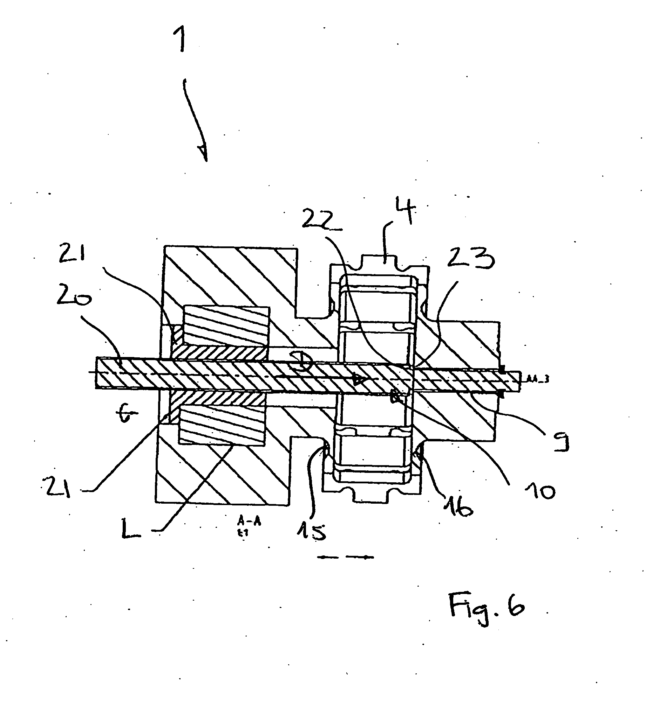

Eine dritte Ausführungsform eines erfindungsgemäßen Spanndorns 1 ist in der Figur 6 gezeigt. Bei dieser Ausführungsform werden die Zugkräfte durch einen Spindelantrieb 10 erzeugt, der in der Durchgangsbohrung 9 des Grundkörpers 3 angeordnet ist. Konkret gehört zu dem Spindelantrieb 10 eine Spindel 20, die an ihrem einen, in der Zeichnung rechten Endbereich in dem Grundkörper 3 drehfest und axial verschiebbar gelagert ist und an ihrem anderen, auf der gegenüberliegenden Seite der Spannhülse 4 gelegenen Endbereich eine Spindelmutter 21 durchgreift, die drehbar aber axialfest in dem Grundkörper 3 gelagert und drehend antreibbar ist, um die Spindel 20 axial zu bewegen. An der Spindel 20 ist ein Absatz 22 vorgesehen, der mit einer entsprechenden Anschlagfläche 23 des Grundkörpers 3 in Kontakt kommt, wenn die Spindel 20 aus der in Figur 6 gezeigten Lage nach rechts bewegt wird und gegen den Grundkörper 3 drückt, so daß in diesem Zugspannungen auftreten, welche über die Festkörpergelenke 15, 16 in eine nach innen gerichtete Bewegung der Spannhülse 4 umgesetzt werden.

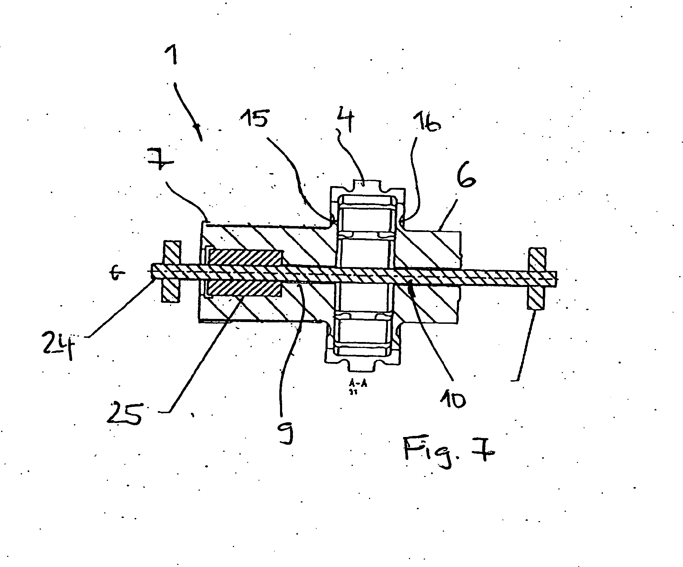

Eine alternative vierte Ausführungsform ist in der Figur 7 dargestellt. Auch bei dieser Ausführungsform besitzt der Spanndorn 1 einen Grundkörper 3 mit einer zentralen Spannhülse 4 und beidseitig daran anschließenden axialen Endabschnitten 6, 7, welche über Festkörpergelenke 15, 16 mit der Spannhülse 4 verbunden sind. Die Spanneinrichtung 10 zur Aufbringung von axialen Zugkräften ist in einer Durchgangsbohrung 9 des Grundkörpers vorgesehen. Zu dieser gehört eine drehend antreibbare Gewindewelle 24, welche in der Durchgangsbohrung 9 drehend antreibbar, aber axialfest angeordnet ist und eine Spindelmutter 25 durchgreift und mit dieser in Eingriff steht, welche in den linken Endabschnitt 7 des Grundkörpers 3 eingesetzt und mit diesem fest verbunden, beispielsweise verpreßt ist. Bei dieser Ausführungsform wird zum Fügen eines Bauteils der rechte Endabschnitt 6 des Grundkörpers 3 fixiert und anschließend die Gewindewelle 24 gedreht, so daß die Spindelmutter 25 und damit auch der linke Endabschnitt 7 des Grundkörpers 3 nach links gezogen werden. Die hierdurch in den Grundkörper 3 eingeleiteten Zugkräfte werden über die Festkörpergelenke 15, 16 in die gewünschte Bewegung der Spannhülse 4 umgesetzt.

## Patentansprüche

1. Spanndorn (1) mit einer Spannhülse (4), die eine außen liegende Spannfläche (4a) ausbildet, und Krafteinleitungsabschnitten (6, 8), über welche axiale Kräfte auf den Spanndorn (1) ausgeübt werden können, wobei zwischen den Krafteinleitungsabschnitten (6, 8) und der Spannfläche (4a) Festkörpergelenke (15, 16) angeordnet sind, durch welche auf die Krafteinleitungsabschnitte (6, 8) wirkende axiale Zugkräfte in eine radial nach innen gerichtete Verformung der spannfläche (4a) umgesetzt werden, so dass ein zu verbindenes Bauteil (2) auf die Spannhülse (4) des Spanndorn (1) gesteckt werden kann und wobei eine Druckverbindung zwischen dem Spanndorn (1) und dem Bauteil (2) hergestellt werden kann, indem die Spannhülse (4) elastisch rückverformt wird, **dadurch gekennzeichnet, dass** in einer Durchgangsbohrung (9) des Spanndorns (1) Spannmittel (10) vorgesehen sind, um die axialen Zugkräfte zu erzeugen und die Krafteinteilungsabschnitte (6, 8) zur Einleitung von Zugkräften radial innerhalb von der Spannfläche (4a) liegen.

2. Ein Spanndorn (1) nach Anspruch 1, **dadurch gekennzeichnet, dass** die Durchgangsbohrung (9) an ihrem einen Endbereich verschlossen ist.

3. Ein Spanndorn (1) nach Anspruch 2, **dadurch gekennzeichnet, dass** in die Durchgangsbohrung (9) an ihrem dem verschlossenen Ende des Spanndorns (1) gegenüberliegenden axialen Ende eine Gewindemutter (11) verstellbar eingeschraubt ist, wobei zwischen dem verschlossenen Ende und der Gewindemutter (11) Druckübertragungsmittel (13, 14) vorgesehen sind, um bei einem Einschrauben der Gewindemutter (11) in Richtung des geschlossenen Endes eine Druckkraft auf das geschlossene Ende auszuüben und damit eine Zugkraft in den Spanndorn (1) einzuleiten.

4. Ein Spanndorn (1) nach Anspruch 2, **dadurch gekennzeichnet, daß** an dem dem geschlossenen Ende gegenüberliegenden Ende des Spanndorns (1) ein hydraulisch oder pneumatisch betätigbarer Kolben (17) vorgesehen ist, wobei zwischen dem verschlossenen Ende und dem Kolben (17) Druckübertragungsmittel (18) vorgesehen sind, um bei einer Betätigung des Kolbens (17) über die Druckübertragungsmittel (18) auf das geschlossene Ende eine Druckkraft auszuüben und damit in den Spanndorn (1) eine Zugkraft einzuleiten.

5. Ein Spanndorn (1) nach Anspruch 4, **dadurch gekennzeichnet, daß** der Kolben (17) in dem offenen Ende des Spanndorns (1) verschiebbar angeordnet ist.

6. Ein Spanndorn (1) nach einem der Ansprüche 3 bis 5, **dadurch gekennzeichnet, daß** die Druckübertragungsmittel eine Druckübertragungsstange (13, 18a) aufweisen.

7. Ein Spanndorn (1) nach einem der Ansprüche 3 bis 6, **dadurch gekennzeichnet, daß** die Druckübertragungsmittel insbesondere im Bereich des mit dem geschlossene Ende des Spanndorns (1) in Kontakt kommenden Bereich Kugeln (14, 18b) aufweisen.

8. Ein Spanndorn (1) nach Anspruch 1 oder 2, **dadurch gekennzeichnet, daß** in der Durchgangsbohrung (9) des Spanndorns (1) eine Spindel (20) angeordnet ist, die an ihrem einen Endbereich drehbar und axial verschiebbar in dem Spanndorn (1) gelagert ist und an ihrem anderen Endbereich eine Spindelmutter (21) durchgreift, die drehbar aber axialfest in dem Spanndorn (1) gelagert und drehend antreibbar ist, wobei an der Spindel (18) und dem Spanndorn (1) Anschläge (22, 23) vorgesehen sind, die miteinander in Kontakt kommen, wenn die Spindel (20) in einer axialen Richtung bewegt wird.

9. Ein Spanndorn (1) nach Anspruch 1 oder 2, **dadurch gekennzeichnet, daß** in der Durchgangsbohrung (9) des Spanndorns (1) eine drehend antreibbare Gewindewelle (24) axialfest angeordnet ist, wobei der Spanndorn auf einer Seite der Spannfläche (4a) fixiert ist und auf der gegenüberliegenden Seite des Spannbereiches eine Spindelmutter (25) in dem Spanndorn (1) gehalten ist, welche mit einem Gewindeabschnitt der Spindelwelle (24) in Eingriff steht, so daß eine Drehung der Spindelwelle (24) in eine Axialbewegung der Spindelmutter (25) umgesetzt wird, durch welche Zugkräfte in den Spanndorn (1) eingeleitet werden.

## Claims

1. A mandrel (1) with a clamping sleeve (4), that provides an outer clamping surface (4a), and force transmitting sections (6, 8), by means of which axial forces can be exerted upon the mandrel (1), wherein between the force transmission sections (6, 8) and the clamping surface (4a) solid body joints (15, 16) are disposed by means of which axial tractive forces exerted upon the force transmission sections (6, 8) are converted into an inwardly radial deformation of the clamping surface (4a), so that a component to be connected (2) can be placed onto the clamping sleeve (4) of the mandrel (1), and wherein a pressure connection between the mandrel (1) and the component (2) can be realized by way of elastic reversal of the deformation of the clamping sleeve (4), **characterised in that** clamping means (10) are provided within a through boring (9) of the mandrel (1) to generate the axial tractive forces and that the force transmission sections (6, 8) for transmitting tractive forces lie radially within the clamping surface (4a).

2. Mandrel (1) according to claim 1, **characterised in that** the trough boring (9) is closed on its one end region.

3. Mandrel (1) according to claim 2, **characterised in that** a nut (11) is adjustably screwed in the through boring (9) at its axial end lying opposite to the closed end of the mandrel (1), wherein pressure transfer means (13, 14) are provided between the closed end and the nut (11) so as to exert a pressure force upon the closed end when the nut (11) is screwed in the direction of the closed end, and thereby to transmit a tractive force into the mandrel (1).

4. Mandrel (1) according to claim 2, **characterised in that** a hydraulically or pneumatically operable piston (17) is provided on the end of the mandrel (1) lying opposite to the closed end, wherein pressure transfer means (18) are provided between the closed end and the piston (17) so as to exert a pressure force upon the closed end by means of the pressure transfer means (18) when the piston is operated (17), and thereby to transmit a tractive force into the mandrel (1).

5. Mandrel (1) according to claim 4, **characterised in that** the piston (17) is disposed movably in the open end of the mandrel (1).

6. Mandrel (1) according to any of claims 3 to 5, **characterised in that** the pressure transfer means have a pressure transfer rod (13, 18a).

7. Mandrel (1) according to any of claims 3 to 6, **characterised in that** the pressure transfer means have balls (14, 18b), particularly in the region of the region coming into contact with the closed end of the mandrel (1).

8. Mandrel (1) according to claim 1 or 2, **characterised in that** a spindle (20) is disposed in the through boring (9) of the mandrel (1) and mounted at its one end region so as to be rotatable and axially movable in the mandrel (1), and at its other end region passes through a spindle nut (21), which is mounted in the mandrel (1) so as to be rotatable, but axially secure, and which is rotatably driveable, where stops (22, 23) are provided on the spindle (20) and the mandrel (1) which come into contact with one another when the spindle (20) is moved in an axial direction.

9. Mandrel (1) according to claim 1 or 2, **characterised in that** a rotatably driveable thread shaft (24) is disposed in the through boring (9) of the mandrel (1) so as to be axially secure, wherein the mandrel (1) is fixed onto one side of the clamping surface (4a) and on the opposite side of the clamping region a spindle nut (25) is held in the a mandrel (1) which engages with a threaded section of the spindle shaft (24), so that a rotation of the spindle shaft (24) is converted into an axial movement of the spindle nut (25) by means of which tractive forces are transmitted into the mandrel (1).

## Revendications

1. Mandrin (1) avec une douille de serrage (4) qui forme une plage de serrage extérieure (4a) et des zones d'application de la force (6, 8) par lequel les forces axiales peuvent être exercées sur le mandrin (1), entre les zone d'application de la force (6, 8) et le plage de serrage (4a) sont arrangées des articulations à corps solide (15, 16) par lesquelles des forces de traction axiales agissant sur les zones d'application de la force sont transférées dans une déformation vers l'intérieur de plage de serrage (4a) de façon qu'un élément à assembler (2) peut être emboîté sur la douille de serrage (4) du mandrin (1) pendant que peut être réalisé un assemblage par pression du mandrin (1) et de l'élément (2) par la retour à la forme initiale de façon élastique de la douille de serrage (4) **caractérisé en ce que** dans un trou traversant (9) du mandrin (1) sont prévus des dispositifs de serrage (10) pour générer des forces de traction axiales et que les zones d'application de la force (6, 8) pour l'application des forces de traction se situent dans le sens radial à l'intérieur de la plage de serrage (4a).

2. Mandrin (1) selon la revendication 1, **caractérisé en ce que** le trou traversant (9) est fermé à l'une de ses sections terminales.

3. Mandrin (1) selon la revendication 2, **caractérisé en ce que** un écrou fileté (11) est vissé de façon réglable dans le trou traversant (9) du côté axial opposé au côté fermé du mandrin (1). Entre le côté fermé et l'écrou fileté (11) sont prévus des agents de transmission de pression (13, 14) afin d'exercer une force de pression sur le côté fermé par le vissage de l'écrou fileté (11) et introduire ainsi une force de pression dans le mandrin (1)

4. Mandrin (1) selon la revendication 2, **caractérisé en ce que** sur le côté opposé au côté fermé du mandrin (1) est prévu un piston (17) à action hydraulique ou pneumatique et entre le côté fermé et le piston (17) sont prévus des agents de transmission de pression (18) pour exercer une force de pression sur le côté fermé par l'action du piston via les agents de transmission de pression (18) et introduire ainsi la force de pression dans le mandrin (1).

5. Mandrin (1) selon la revendication 4, **caractérisé en ce que** le piston (17) est agencé de manière mobile dans le côté ouvert du mandrin (1).

6. Mandrin (1) selon la revendication 3 à 5, **caractérisé en ce que** les agents de transmission de pression présentent une barre de transfert de pression (13, 18a).

7. Mandrin (1) selon la revendication 3 à 6, **caractérisé en ce que** les agents de transmission de pression présentent des billes (14, 18b) notamment au niveau de la zone entrant en contact avec le côté fermé du mandrin (1)

8. Mandrin (1) selon la revendication 1 ou 2, **caractérisé en ce que** dans le trou traversant (9) du mandrin (1) est agencé une broche dont l'une des sections terminales est monté tournant et mobile axialement dans le mandrin (1), et dont l'autre section terminale traverse un écrou de broche monté tournant et immobile axialement (21) dans le mandrin (1) pouvant être entraîné en rotation. Dans la broche (18) et le mandrin (1) sont prévues des butées qui entrent en contact entre elles lorsque la broche (20) est en mouvement en direction axiale.

9. Mandrin (1) selon la revendication 1 ou 2, **caractérisé en ce que**, dans le trou traversant (9) du mandrin (1) un arbre fileté (24) pouvant être entraîné en rotation est immobile axialement. Le mandrin est fixé sur l'un des côtés de la plage de serrage (4a) et du côté inverse de la zone de serrage un écrou de broche (25) est logé dans le mandrin lequel l'écrou de broche intervient avec une section filetée de l'arbre (24) de manière à ce que la rotation de l'arbre fileté (24) provoque le mouvement axial de l'écrou de broche (25) par lequel les forces de tension sont introduites dans le mandrin (1).
